# EUROPEAN PATENT APPLICATION

(11) **EP 3 309 871 A1**
(43) Date of publication of application: **18.04.2018**
(21) Application number: 17196459.6
(22) Date of filing: 13.10.2017
(51) Int. Cl.: H01M 4/131, H01M 4/133, H01M 4/134, H01M 4/36, H01M 4/505, H01M 4/525, H01M 4/583, H01M 10/0525

(54) **ELECTRODE ASSEMBLY, LITHIUM ION BATTERY AND ELECTRONIC DEVICE INCLUDING THE SAME**

(30) Priority: 14.10.2016 KR 20160133286
(71) Applicant: Samsung Electronics Co., Ltd., Gyeonggi-do 16677 (KR)
(72) Inventor: OH, Boo Keun, 16505 Gyeonggi-do, (KR)
(74) Representative: HGF Limited

(57) **Abstract**

An electrode assembly and a lithium ion battery are provided. An electrode assembly includes (1) an anode plate that includes an anode active material which in turn includes a first lithium metal oxide and a second lithium metal oxide, and (2) a cathode plate that includes a cathode active material which in turn includes a graphite-based composite. The number of dissociated lithium ions included in the second lithium metal oxide is larger than the number of dissociated lithium ions included in the first lithium metal oxide. An electronic device including the lithium ion battery is also provided.

## Description

### PRIORITY

This application claims priority to Korean Patent Application No. 10-2016-0133286, filed October 14, 2016, the content of which is incorporated herein by reference.

### BACKGROUND OF THE INVENTION

### 1. Field of the Invention

The present disclosure generally relates to technology for implementing high energy density lithium (Li) ion batteries.

### 2. Background of the Invention

Electronic devices, in particular mobile electronic devices, have been made popular in recent years. Such electronic devices have been developed to perform various application functionalities such as internet services, digital image capture, gaming, as well as communication functions. As these devices are designed to perform an increasing number of functions, extending the devices' battery life has become an increasingly paramount concern.

Typically, batteries are mounted on these electronic devices to be used as power sources when chemical reactions that take place within the batteries generate electricity. These batteries are noted for being eco-friendly as they do not generate byproducts during energy generation. In addition, when these batteries are used in electric cars, for example, they also provide the advantage of reducing fossil fuel consumption.

Various types of batteries have been developed in the art, each type using different materials to create the aforementioned chemical reactions. Different types of batteries include nickel cadmium (Ni-Cd) batteries, nickel hydrogen (Ni-H2) batteries, nickel zinc (Ni-Zn) batteries, lithium ion batteries, lithium polymer batteries, etc. Lithium ion batteries are commonly used because they generate higher electromotive forces than other batteries but at the same time have fewer memory effects (a characteristic of the battery where the battery gradually loses its maximum energy capacity if it is repeatedly recharged after being only partially discharged).

### SUMMARY OF THE INVENTION

Lithium ion batteries are now the subject of intense study in an effort to improve the technology. As an example, improving the specific capacity of cathode active materials, which may result in an increase in energy density, is regarded as major research subject for lithium ion batteries.

Materials having large specific capacities, such as silicon (Si), tin (Sn), lead (Pb), and the like, are often used as cathode active materials. However, supplementary reactions with lithium ions may cause volume inflation in these materials when they are used for cathode active materials, which may degrade the efficiency of charge/discharge cycles in the lithium ion batteries.

Aspects of the present disclosure are to address at least the above-mentioned problems and/or disadvantages and to provide at least the advantages described below. Accordingly, an aspect of the present disclosure is to provide a lithium ion battery having high energy density. This is accomplished by lessening degradation of battery efficiency caused by reactions in the cathode active material.

In accordance with an aspect of the present disclosure, an electrode assembly includes an anode plate including an anode active material that includes a first lithium metal oxide and a second lithium metal oxide, and a cathode plate including a cathode active material that includes a graphite-based composite.

According to an embodiment, the second lithium metal oxide may include a larger number of dissociated lithium ions than the number of dissociated ions included in the first lithium metal oxide.

In accordance with another aspect of the present disclosure, a lithium ion battery includes an exterior member and an electrode assembly.

According to an embodiment, the electrode assembly of the lithium ion battery includes an anode plate including an anode active material that includes a first lithium metal oxide and a second lithium metal oxide, a cathode plate including a cathode active material that includes a graphite-based composite, and a separator disposed between the anode plate and the cathode plate. The second lithium metal oxide may include a larger number of dissociated lithium ions than the number of dissociated ions included in the first lithium metal oxide, and an electrolyte may be impregnated in at least a partial area of the separator.

In accordance with another aspect of the disclosure, an electronic device includes a touch screen display configured to output content corresponding to user control, a processor electrically connected with the touch screen display, and a battery that supplies power to at least one of the touch screen display and the processor.

According to one embodiment, the battery may be a lithium ion battery.

According to various embodiments, it is possible to improve the capacity of a lithium ion battery by improving reaction efficiency between lithium ions and the cathode active material of the battery.

According to various embodiments, it is possible to lengthen the useful life of the battery because its efficiency is improved.

The various effects and advantages described above may be derived directly or indirectly from various embodiments of the present disclosure.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG.1 is a diagram illustrating a lithium ion battery according to an embodiment; and
FIG. 2 is a diagram illustrating a configuration of an electronic device according to an embodiment.

Throughout the drawings, it should be noted that like reference numbers are used to depict the same or similar elements, features, and structures.

### DETAILED DESCRIPTION OF EMBODIMENTS OF THE PRESENT INVENTION

Hereinafter, various embodiments of the present disclosure are disclosed with reference to the accompanying drawings. However, the present disclosure is not intended to be limited by the disclosed embodiments and it is intended that the present disclosure covers all modifications, equivalents, and/or alternatives of the present disclosure provided they are within the scope of the appended claims and their equivalents.

The terms and words used in the following description and claims may not be limited to their dictionary meanings, but may be used by the inventor to enable a clear and consistent understanding of the present disclosure. Accordingly, it should be apparent to those skilled in the art that the following description of the various embodiments of the present disclosure is provided for illustration purpose only and not for the purpose of limiting the present disclosure as defined by the appended claims and their equivalents.

It is to be understood that the singular forms "a," "an," and "the" include the plural thereof unless the context clearly dictates otherwise. Thus, for example, a reference to "a component surface" may include one or more of such surfaces.

The term "include," "comprise," and "have", or "may include," or "may comprise," and "may have" used herein indicates disclosed functions, operations, or existence of elements but does not exclude other functions, operations or elements.

For example, the expressions "A or B," or "at least one of A and/or B" may indicate A and B, A, or B. Thus, the expression "A or B" or "at least one of A and/or B" may indicate (1) at least one A, (2) at least one B, or (3) both at least one A and at least one B.

The terms such as "1st," "2nd," "first," "second," and the like used herein may be used to distinguish various different elements in the present disclosure, but are not intended to limit those elements. For instance, "a first user device" and "a second user device" may indicate different user devices regardless of order or importance. Accordingly, a first component may be referred to as a second component and vice versa without departing from the scope of the present disclosure.

In various embodiments of the present disclosure, it is intended that when a component (for example, a first component) is referred to as being "operatively or communicatively coupled with/to" or "connected to" another component (for example, a second component), the component may be directly connected to the other component or connected through another component (for example, a third component). In contrast, when a component (for example, a first component) is referred to as being "directly connected to" or "directly accessed by" another component (for example, a second component), another component (for example, a third component) does not exist between the component (for example, the first component) and the other component (for example, the second component).

The expression "configured to" used in various embodiments of the present disclosure may be interchangeably used with "suitable for," "having the capacity to," "designed to," "adapted to," "made to," or "capable of," depending on the context. The term "configured to" may not necessarily indicate "specifically designed to" in terms of hardware. Instead, the expression "a device configured to" in some situations may indicate that the device, alone or in conjunction with another device, are "capable of." For example, the expression "a processor configured to perform A, B, and C" may indicate a dedicated processor (for example, an embedded processor) for performing A, B, and C operations or a general purpose processor (for example, a central processing unit (CPU) or application processor (AP)) that performs A, B, and C by executing at least one software program stored in a corresponding memory device.

Terms used in various embodiments of the present disclosure are used to describe certain embodiments of the present disclosure, but are not intended to limit the scope of other embodiments. Unless made clear by the context or indicated otherwise, all terms used herein may have the same meanings that are generally understood by a person skilled in the art, and should not be understood to have excessively formal meanings. In any case, even the terms specifically defined in the present specification are not intended to be interpreted as excluding embodiments of the present disclosure.

An electronic device according to various embodiments of the present disclosure may be a smartphone, a tablet personal computer (PC), a mobile phone, a video telephone, an electronic book reader, a desktop PC, a laptop PC, a netbook computer, a workstation, a server, a personal digital assistant (PDA), a portable multimedia player (PMP), a Motion Picture Experts Group (MPEG-1 or MPEG-2) Audio Layer 3 (MP3) player, a mobile medical device, a camera, or a wearable device. The wearable device may be an accessory-type device (e.g., a watch, a ring, a bracelet, an anklet, a necklace, glasses, a contact lens, a head-mounted device (HMD)), a textile- or clothing-integrated-type device (e.g., an electronic apparel), a body-attached-type device (e.g., a skin pad or a tattoo), or a bio-implantable-type device (e.g., an implantable circuit).

In one or more embodiments of the present disclosure, the electronic device may be a home appliance. The smart home appliance may be, for example, a television (TV), a digital video/versatile disc (DVD) player, an audio player, a refrigerator, an air conditioner, a cleaner, an oven, a microwave oven, a washing machine, an air cleaner, a set-top box, a home automation control panel, a security control panel, a television (TV) box (e.g., Samsung HomeSync™, Apple TV™, or Google TV™), a game console (e.g., Xbox™ or PlayStation™), an electronic dictionary, an electronic key, a camcorder, or an electronic picture frame.

In other embodiments of the present disclosure, the electronic device may be a medical device (e.g., a portable medical measurement device, such as a blood glucose measuring device, a heart rate measuring device, a blood pressure measuring device, a body temperature measuring device, or the like, a magnetic resonance angiography (MRA) device, a magnetic resonance imaging (MRI) device, a computed tomography (CT) device, a medical scanner, an ultrasonic scanner, or the like), a navigation device, a global navigation satellite system (GNSS) device, an event data recorder (EDR), a flight data recorder (FDR), a vehicle infotainment device, electronic equipment for vessels (e.g., a navigation system, a gyrocompass, or the like), avionics, a security device, a head unit for a vehicle, an industrial or home robot, an automatic teller machine (ATM), a point of sales (POS) device of a store, or an Internet of things (IoT) device (e.g., a light bulb, various sensors, an electric or gas meter, a sprinkler, a fire alarm, a thermostat, a streetlamp, a toaster, exercise equipment, a hot water tank, a heater, a boiler, or the like).

According to yet other embodiments of the present disclosure, the electronic device may be a part of furniture or a building/structure, an electronic board, an electronic signature receiving device, a projector, or a measuring instrument (e.g., a water meter, an electricity meter, a gas meter, a wave meter, or the like). The electronic device according to the present disclosure may be one or more combinations of the above-mentioned devices. The electronic device may also be a flexible device. The electronic device according to one or more embodiments of the present disclosure is not limited to the above-mentioned devices, and may include other electronic devices that are developed in the art.

Hereinafter, an electronic device according to one or more embodiments of the present disclosure will be described in more detail with reference to the accompanying drawings. The term "user" used herein may refer to a person who uses the electronic device or may refer to a device (e.g., an artificial intelligence electronic device) that uses the electronic device.

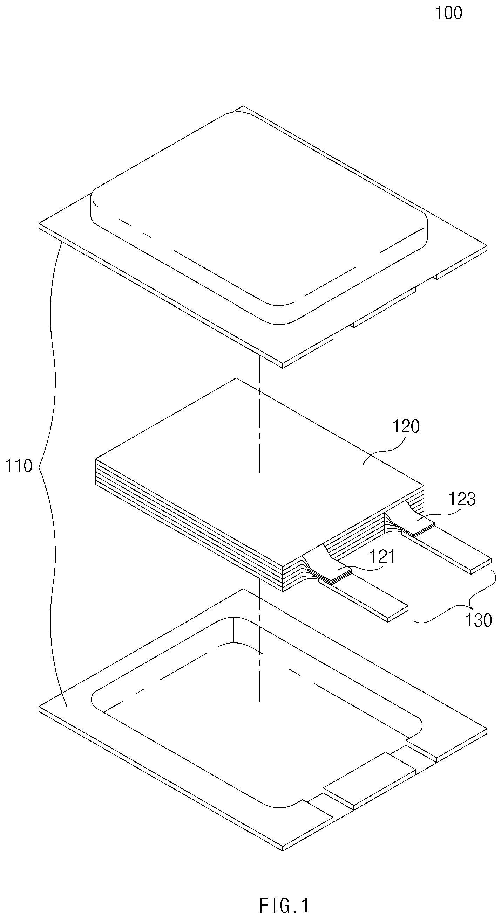

FIG.1 is a diagram illustrating a lithium ion battery according to an embodiment.

Referring to FIG. 1, a lithium ion battery 100 may include an exterior member 110 and an electrode assembly 120 accommodated within the exterior member 110. In some embodiment, the lithium ion battery 100 may further include other elements in addition to the aforementioned elements.

The exterior member 110 may accommodate the electrode assembly 120 and protect the electrode assembly 120 from the external environment. For example, the exterior member 110 may form an interior space which has the size and/or shape corresponding to the electrode assembly 120 to accommodate the electrode assembly 120. When the electrode assembly 120 is seated within the interior space of the exterior member 110, the exterior member 110 may be sealed using a thermosetting or photo-curable adhesive.

In one embodiment, the exterior member 110 may be formed by laminating multiple film sheets and/or metal sheets. The film sheets may include, for example, an insulator such as polyethylene terephthalate resin or nylon resin. The metal sheets, which may be aluminum sheets, may function to maintain the shape and mechanical strength of the exterior member 110. In one embodiment, the film and metal sheets may be laminated in a thickness smaller than 76 *µ*m Although the interior space of the exterior member 110 is illustrated in FIG. 1 as a rectangular pouch, the present disclosure is not so limited. Thus, the interior space of the exterior member 110 may be various shapes.

The electrode assembly 120 may include a stacked structure of at least one anode plate, at least one cathode plate, and a separator structure disposed between the anode plate and the cathode plate. In one embodiment, each anode plate may include an anode tab 121 extending from at least a partial area thereof. Corresponding to the anode structure, each cathode plate may include a cathode tab 123 extending from a partial area thereof. The anode tab 121 and the cathode tab 123 may be connected with electrode leads 130 which are made of conductive material. In one embodiment, at least a partial area of the electrode lead 130 may be exposed to the exterior of the exterior member 110 so that external components may electrically connect to the anode plates and cathode plates. In one embodiment, the electrode assembly 120 of the aforementioned structure may operate in a voltage ranging from 2.75 V to 4.45 V.

In one embodiment, the anode plate may include a first lithium metal oxide as the anode active material. In one embodiment, the first lithium metal oxide may include at least one transition metal (e.g., cobalt (Co) or Ni). In another embodiment, the first lithium metal oxide may include two or more different transition metal compounds. In one embodiment, the anode active material may include the first lithium metal oxide, and may further include a second lithium metal oxide, for example, on at least a part of the surface or inside of the first lithium metal oxide. In one embodiment, as compared to the total weight of the anode active material, the weight of the second lithium metal oxide may be 0.5% to 5.0% of the total weight of the anode active material. In another embodiment, the weight of the second lithium metal oxide may be 1.0% to 3.0% of the total weight of the anode active material.

The second lithium metal oxide may include, for example, manganese (Mn), zirconium (Zr), Mn-Si compounds, Co, ferrum (Fe), or may include a mixture with two or more of the aforementioned materials. Additionally, the second lithium metal oxide may include a larger number of dissociated lithium ions than the first lithium metal oxide.

In one embodiment, the anode plate may be manufactured by first preparing a slurry that is a mixture of a solvent, a binder, and a conductive material in the anode active material. Next, the slurry is coated on a current collector. Then, the slurry-coated current collector is dried. The current collector may be made with aluminum (Al) or Ni, or a combination of A1 and Ni. But the current collector is not so limited and may be made with various other metals which have high conductivity and do not react in the voltage range (e.g., from 2.75V to 4.45 V) of the electrode assembly 120.

The solvent may be made with N-methyl-2-pyrolydone, diacetone alcohol, dimethyl formaldehyde, propylene glycol mono methyl ether, methyl cellosolve, ethyl cellosolve, butyl cellosolve, isopropyl cellosolve, acetylacetone, methylisobutylketone, n-butyl acetate, cellosolve acetate toluene, xylene, or may include a mixture with two or more of the aforementioned materials. The solvent may also include water.

The binder may perform the function of accelerating the combination of the anode active material with other ingredients (e.g., solvent or the conductive material). For example, the binder may be made with polytetrafluoroethylene, polyvinylidene fluoride, styrene-butadiene rubber, fluorine rubber, polymers in which Li, sodium (Na), or calcium (Ca) is substituted for hydrogen of the aforementioned materials, or mixtures with two or more of the aforementioned materials.

The conductive material may include, for example, acetylene black, carbon black, denka black, carbon fiber, carbon nanotube, metal powder, or conductive metal oxides.

In an embodiment, the cathode plate as the cathode active material may include a graphite-based composite which is a mixture of a graphite-based material and a high-capacity silicon oxide based material. For example, as compared to the total weight of the cathode active material, the high-capacity silicon oxide based material may be 3.0% to 20.0% of the total weight of the cathode active material. In another example, the high-capacity silicon oxide based material may be 5.0% to 10.0% of the total weight of the cathode active material. The electronic conductivity of the silicon oxide based material may have relatively lower than that of the graphite-based material. Thus, the silicon oxide based material increases the resistance of the cathode plate, and may suppress large current conduction which occurs when the electrode assembly 120 is internally in a short circuit. The graphite-based material may be made with natural graphite, artificial graphite, mesocarbon microbeads, hard carbon, or soft carbon. In one embodiment, the cathode plate may be manufactured in a process identical or similar to the process for manufacturing the anode plate. The solvent, binder, conductive material, or current collector used for the cathode plate may be made with materials that are the same as or similar to the aforementioned materials used for the manufacture of the anode plate.

In one embodiment, the high-capacity silicon oxide based material may react electrochemically with the lithium ions included in the first or second lithium metal oxide when the lithium ion battery 100 is initially charged. First, assume that the anode plate (hereafter referred to as 'a first anode plate') includes only the first lithium metal oxide as then anode active material. The reaction described above allows for the deoxidization of the silicon oxide based material by oxidizing the first lithium metal oxide. At this time, lithium ions included in the first lithium metal oxide may be added to the silicon oxide based material. For example, during the first or initial charging operation, lithium ions are irreversibly added to the silicon oxide based material to generate a surface layer such as a solid electrolyte interphase (SEI) layer. During this operation, the silicon oxide based material may be change its crystalline structure and then expand in volume, and silicide compound may be formed in the silicon oxide based material. When this occurs, the lithium ion battery 100 may be degraded in initial charging/discharging efficiency due to the volume expansion of the silicon oxide based material or the formation of the silicide compound. Thus, the degraded lithium ion battery 100 may only operate at "a first efficiency" (e.g., equal to or lower than 80.0 %). The lithium ion battery 100 may be repeatedly operable with charging/discharging cycles in efficiency close to the first efficiency.

On the other hand, an anode plate according to an embodiment of the present disclosure (hereafter referred to as 'a second anode plate') may include, as the anode active material, a first lithium metal oxide and a second lithium metal oxide, which includes a larger number of dissociated lithium ions than the first lithium metal oxide. Because the second lithium metal oxide includes a relatively larger number of lithium ions, loss of lithium ions caused by generating the surface layer may be compensated. As a result, during the initial charging operation of the lithium ion battery 100, lithium ions from the second lithium metal oxide can compensate charging efficiency degradation caused by the silicon oxide based material. Accordingly, the lithium ion battery 100 that uses the second anode plate may be charged at the second efficiency that is higher than the first efficiency.

As described above, the second lithium metal oxide may include a larger number of dissociated lithium ions than the first lithium metal oxide. In one embodiment, the second lithium metal oxide may include compounds such as Li2M1O3 Li2M2O4, and LixM3O4 (where x is larger than 5). M1 may be, for example, Mn or Zr, M2 may include Mn-Si compounds, and M3 may be Mn, Co, Fe, or a mixture of two or more of the aforementioned materials. The amount of the second lithium metal oxide required is inversely proportional to the amount of dissociated lithium ions generated by the second lithium metal oxide. Accordingly, as the number of dissociated lithium ions of the second lithium metal oxide increases, the weight of the second lithium metal oxide may decrease.

The separator may be disposed between the anode plate and the cathode plate, and for example, may be implemented using a single porous polymer film, which may be manufactured with a polyolefin-based polymer such as ethylene homopolymer, propylene homopolymer, ethylene-butene copolymer, ethylene-hexene copolymer, or ethylene-methacrylate copolymer. Alternatively, the separator may be implemented by stacking a porous polymer film. In another embodiment, the separator may be implemented using a porous non-woven fabric made with polyethylene terephthalate fiber or glass fiber with a high melting point.

In one embodiment, an organic electrolyte may be impregnated in at least a partial area of the separator. The organic electrolyte may include an organic solvent and a lithium salt. The organic solvent may be made with propylene carbonate, ethylene carbonate, dimethyl carbonate, ethyl methyl carbonate, methylpropyl carbonate, dipropyl carbonate, vinylene carbonate, fluorinated ethylene carbonate, vinylethylene carbonate, dimethyl sulfoxide, acetonitrile, dimethoxyethane, diethoxyethane, sulfolane, gamma-butyrolactone, propylene sulfite, tetrahydrofuran, ethyl propionate, propyl propionate, methyl acetate, ethyl acetate, or propyl acetate. Additionally, the lithium salt may be made with lithium hexafluorophosphate (LiPF6), lithium tetrafluoroborate (LiBF4), lithium tetrachloride (LiClO4), lithium hexafluoroarsenic (LiAsF6), lithium trifluoromethanesulfonate (LiCF3SO3), lithium bis trifluoromethanesulfonyl imide (LiN(CF3SO2)2), or lithium bis oxalic acid borate (LiBOB).

According to one embodiment described above, an electrode assembly may include an anode plate including an anode active material that includes a first lithium metal oxide and a second lithium metal oxide, and a cathode plate including a cathode active material that includes a graphite-based composite.

According to one embodiment, the second lithium metal oxide may include a larger number of dissociated lithium ions than the number of dissociated ions included in the first lithium metal oxide.

According to one embodiment, the first lithium metal oxide may include Co, Ni, and/or a mixture of Co and Ni.

According to one embodiment, the second lithium metal oxide may include manganese, Zr, Mn-Si compounds, Co, Fe, and/or a mixture of two or more of manganese, Zr, Mn-Si compounds, Co, and Fe.

According to one embodiment, the weight of the second lithium metal oxide may be 0.5% to 5.0% of the total weight of the anode active material.

According to one embodiment, the graphite-based composite is a mixture of a graphite-based material and a silicon oxide based material.

According to one embodiment, the weight of the silicon oxide based material may be 3.0% to 20.0% of the total weight of the cathode active material.

According to one embodiment, the electrode assembly may operate in a voltage ranging from 2.75 V to 4.45 V.

The electrode assembly according to one embodiment may further include a separator disposed between the anode plate and the cathode plate, wherein an electrolyte is impregnated in at least a partial area of the separator.

A lithium ion battery according to another embodiment described above may include an exterior member, and an electrode assembly, wherein the electrode assembly may include an anode plate including an anode active material that includes a first lithium metal oxide and a second lithium metal oxide, a cathode plate including a cathode active material that includes a graphite-based composite, and a separator disposed between the anode plate and the cathode plate. The second lithium metal oxide may include a larger number of dissociated lithium ions than the number of dissociated ions included in the first lithium metal oxide, and an electrolyte may be impregnated in at least a partial area of the separator.

According to the other embodiment, the thickness of the exterior member may be smaller than 76 *µ*m

According to the other embodiment, the first lithium metal oxide may include Co, Ni, and/or a mixture of Co and Ni.

According to the other embodiment, the second lithium metal oxide may include Mn, Zr, Mn-Si compounds, Co, Fe, and/or a mixture of two or more of Mn, Zr, Mn-Si compounds, Co, and Fe.

According to the other embodiment, the graphite-based composite is a mixture of a graphite-based material and a silicon oxide based material.

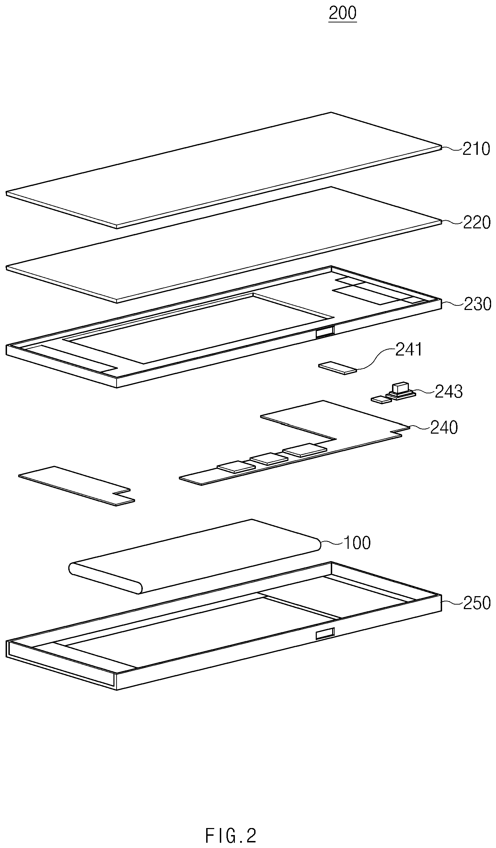

FIG. 2 is a diagram illustrating a configuration of an electronic device according to an embodiment.

Referring to FIG. 2, an electronic device 200 may include a cover glass 210, a touch screen display 220, a supporting member 230, a printed circuit board 240, a battery 100, and a housing 250. In some embodiments, the electronic device 200 may exclude at least one of the aforementioned elements or may additionally include another element. Additionally, in one or more embodiments, at least one of the aforementioned elements may be flexible.

The cover glass 210 may be disposed on an upper part of the touch screen display 220 and may allow light generated by the touch screen display 220 to pass through. In an embodiment, a user input to operate and/or control the electronic device 200 may be applied on the cover glass 210. For example, a user may be able to apply an input on the surface of the cover glass 210 by performing a touch, gesture, or approach using a body part (e.g., a finger) or a touch pen. In one embodiment, the cover glass 210 may be included as a part of the touch screen display 220. The cover glass 210 may be referred to as a glass window or a cover window.

The touch screen display 220 may output visual content (e.g., text, image, video, icon, widget, or symbol) corresponding to the user input applied on the surface of the cover glass 210. In one or more embodiments, the touch screen display 220 may include a touch panel for receiving user input and/or a display panel for outputting content.

The touch panel may generate an electrical signal in response to a user input applied on the cover glass 210 and may output the electrical signal. The touch panel may include at least one electrode layer and a control circuit.

The display panel may output content in response to the user input or in response to instructions transmitted by a processor of the electronic device 200. For example, the display panel may output content related to operation or execution of at least one application program stored in the electronic device 200. The display panel may variously be implemented using Liquid Crystal Displays (LCD), Light Emitting Diode (LED) displays, Organic LED (OLED) displays, MicroElectroMechanical Systems (MEMS), electronic paper displays, etc.

The supporting member 230 (e.g., a bracket) may have a size corresponding to the touch screen display 220 and may be used to fix and support the touch screen display 220. In various alternative embodiments, the supporting member 230 may be joined with the touch screen display 220 using additional jointing members (e.g., screws or bands). Alternatively, at least a partial area of the upper surface of the supporting member 230 may be coated with an adhesive material so that the supporting member 230 adheres to the touch screen display 220.

Various electronic components required for the operations of the electronic device 200 may be mounted on the printed circuit board 240. For example, a memory and/or a processor may be mounted in the printed circuit board 240. The memory may store data or instructions related to at least one other element of the electronic device 200. The processor may perform control, communication computation, and data processing as required by the operations of the electronic device 200. Other components such as speaker 241 and camera 243 may be mounted on the printed circuit board 240. In one embodiment, the printed circuit board 240 may comprise a plurality of circuit boards and at least some among the plurality of circuit boards may be stacked on top of one another and electrically connected to one another.

The battery 100 may supply power to elements included in the electronic device 200. For example, the battery 100 may be electrically connected with the printed circuit board 240 and may supply power to electronic components on the printed circuit board 240. In an embodiment, the battery 100 may include the lithium ion battery described in connection with FIG. 1. The lithium ion battery may include an electrode assembly (120 of FIG. 1) and may include a first lithium metal oxide and a second lithium metal oxide as the anode active material. The second lithium metal oxide may include a larger number of dissociated lithium ions than the first lithium metal oxide. Accordingly, lithium ions included in the second lithium metal oxide may compensate for the charging efficiency degradation caused by the lithium ion reaction in the cathode active material (e.g., a silicon-based material) when the battery 100 is initially charged. The battery 100 may be integrated within the electronic device 200 or may be user-removable from the electronic device 200.

The housing 250 may form the exterior of the electronic device 200 and may accommodate the aforementioned elements. At least one area (e.g., at least a partial area of the upper surface) of the housing 250 may be open so that the interior of the housing 250 is in fluidic communication with the exterior of the housing. The aforementioned cover glass 210 or the touch screen display 220 may be mounted in the opening of the housing 250, thereby allowing the touch screen display 220 to be exposed.

An electronic device according to one embodiment may include a touch screen display configured to output content corresponding to user control, a processor electrically connected with the touch screen display, and a battery configured to supply power to at least one of the touch screen display and the processor.

According to one embodiment, the battery may be a lithium ion battery and the lithium ion battery may include an exterior member and an electrode assembly.

According to one embodiment, the electrode assembly may include (1) an anode plate including an anode active material including a first lithium metal oxide and a second lithium metal oxide that has a larger number of dissociated lithium ions than a number of dissociated ions of the first lithium metal oxide, (2) a cathode plate including a cathode active material that includes a graphite-based composite, and (3) a separator disposed between the anode plate and the cathode plate, where an electrolyte is impregnated in at least a partial area of the separator.

According to one embodiment, the first lithium metal oxide may include Co, Ni, or a mixture of Co and the Ni.

According to one embodiment, the second lithium metal oxide may include manganese, Zr, Mn-Si compound, Co, Fe, or a mixture with two or more of the above materials.

While the present disclosure has been shown and described with reference to various embodiments thereof, it will be understood by those skilled in the art that various changes in form and details may be made therein without departing from the scope of the present disclosure as defined by the appended claims and their equivalents.

## Claims

1. An electrode assembly comprising:
an anode plate including an anode active material that includes a first lithium metal oxide and a second lithium metal oxide; and
a cathode plate including a cathode active material that includes a graphite-based composite,
wherein a first number of dissociated lithium ions included in the second lithium metal oxide is larger than a second number of dissociated lithium ions included in the first lithium metal oxide.

2. The electrode assembly of claim 1, wherein the first lithium metal oxide includes cobalt, nickel, and/or a mixture of cobalt and nickel.

3. The electrode assembly of claim 1, wherein the second lithium metal oxide includes manganese (Mn), zirconium (Zr), manganese-silicon (Mn-Si) compounds, cobalt (Co), ferrum (Fe), and/or a mixture of two or more of Mn, Zr, Nn-Si compounds, Co, and Fe.

4. The electrode assembly of claim 1, wherein a weight of the second lithium metal oxide is 0.5% to 5.0% of a total weight of the anode active material.

5. The electrode assembly of claim 1, wherein the graphite-based composite is a mixture of a graphite-based material and a silicon oxide based material.

6. The electrode assembly of claim 5, wherein a weight of the silicon oxide based material is 3.0% to 20.0% of a total weight of the cathode active material.

7. The electrode assembly of claim 1, wherein the electrode assembly operates in a voltage ranging from 2.75 V to 4.45 V.

8. The electrode assembly of claim 1, further comprising a separator disposed between the anode plate and the cathode plate, wherein an electrolyte is impregnated in at least a partial area of the separator.

9. A lithium ion battery comprising:
an exterior member; and
an electrode assembly,
wherein the electrode assembly includes:
an anode plate including an anode active material that includes a first lithium metal oxide and a second lithium metal oxide, wherein a first number of dissociated lithium ions included in the second lithium metal oxide is larger than a second number of dissociated lithium ions included in the first lithium metal oxide;
a cathode plate including a cathode active material that includes a graphite-based composite; and
a separator disposed between the anode plate and the cathode plate, wherein an electrolyte is impregnated in at least a partial area of the separator.

10. The lithium ion battery of claim 9, wherein a thickness of the exterior member is smaller than 76 *µ*m.

11. The lithium ion battery of claim 9, wherein the first lithium metal oxide includes cobalt, nickel, and/or a mixture of cobalt and nickel.

12. The lithium ion battery of claim 9, wherein the second lithium metal oxide includes manganese (Mn), zirconium (Zr), manganese-silicon (Mn-Si) compounds, cobalt (Co), ferrum (Fe), and/or a mixture of two or more of Mn, Zr, Nn-Si compounds, Co, and Fe.

13. The lithium ion battery of claim 9, wherein the graphite-based composite is a mixture of a graphite-based material and a silicon oxide based material.

14. An electronic device comprising:
a touch screen display configured to output content corresponding to user control;
a processor electrically connected with the touch screen display; and
a lithium ion battery configured to supply power to at least one of the touch screen display and the processor, wherein the lithium ion battery includes:
an exterior member; and
an electrode assembly,
wherein the electrode assembly includes:
an anode plate including an anode active material that includes a first lithium metal oxide and a second lithium metal oxide, wherein a first number of dissociated lithium ions included in the second lithium metal oxide is larger than a second number of dissociated lithium ions included in the first lithium metal oxide;
a cathode plate including a cathode active material that includes a graphite-based composite; and
a separator disposed between the anode plate and the cathode plate, wherein an electrolyte is impregnated in at least a partial area of the separator.

15. The electronic device of claim 14, wherein the first lithium metal oxide includes cobalt, nickel, and/or a mixture of cobalt and the nickel, and
wherein the second lithium metal oxide includes manganese (Mn), zirconium (Zr), manganese-silicon (Mn-Si) compounds, cobalt (Co), ferrum (Fe), and/or a mixture of two or more of Mn, Zr, Nn-Si compounds, Co, and Fe.
